Europäisches Patentamt

European Patent Office

Office européen des brevets

(11) Veröffentlichungsnummer: **0 394 780**
**A2**

# (12) EUROPÄISCHE PATENTANMELDUNG

(21) Anmeldenummer: **90107118.3**

(22) Anmeldetag: **12.04.90**

(51) Int. Cl.⁵: **G11B 23/04, G11B 23/08**

(30) Priorität: **25.04.89 DE 3913510**

(43) Veröffentlichungstag der Anmeldung:
**31.10.90 Patentblatt 90/44**

(84) Benannte Vertragsstaaten:
**DE FR NL**

(71) Anmelder: **Agfa-Gevaert AG**

**D-5090 Leverkusen 1(DE)**

(72) Erfinder: **Breuer, Rudolf**
**Fleckhammerstrasse 40**
**D-8000 München 21(DE)**
Erfinder: **Brunner, Hubert**
**Mühlgasse 4a**
**D-8911 Weil(DE)**
Erfinder: **Liepold, August, Dipl.-Ing.**
**Kaltnerweg 12**
**D-8000 München 70(DE)**
Erfinder: **Pertzsch, Albert, Dipl.-Ing.**
**Leutstettenerstrasse 29**
**D-8000 München 70(DE)**
Erfinder: **Zeroni, Ludwig**
**Nelkenstrasse 40**
**D-8012 Ottobrunn(DE)**

(54) **Magnetbandkassette.**

(57) Beschrieben ist eine Magnetbandcassette, in einer bevorzugten Ausführung eine Cassette für analoge oder digitale Video- beziehungsweise Audioaufzeichnung, welche ein möglichst gleichmäßiges Wickelmoment beim Auf- und Abspielen des Magnetbandes besitzt, ein gleichmäßiges Wickelbild liefert und eine gute Höhenführung des Magnetbandes bewirkt. Diese Verbesserungen werden dadurch erreicht, daß sich zwischen den Gehäusehälften (1, 2) und dem Magnetband (3) sowie den Wickelnaben (5) eine federnd auf die Magnetbandwickel beziehungsweise die Naben drückende Gleitplatte (9, 9′, 10, 10′, 11, 11′, 12, 12′) befindet, die sich federnd an den Innenseiten der Cassettenhälften abstützt.

FIG. 2

Xerox Copy Centre

Die Erfindung betrifft eine Magnetbandcassette, bestehend aus zwei Gehäusehälften und einem dazwischen befindlichen Innenraum, in dem sich auf einem Paar Naben ein auf- und abwickelbares Magnetband befindet sowie mindestens eine Gleitplatte für die federnde Führung der Wickelnaben und des Magnetbandes, wobei die Gleitplatte zwischen Magnetbandwickel und den Gehäusehälften angeordnet ist.

Magnetbandcassetten der oben genannten gattungsmäßigen Art, beispielsweise Compactcassetten vom Philips-Typ werden in zwei verschiedenen Positionen in ein Tonbandgerät eingesetzt, wobei in der einen Position die Gehäusehälfte (1) nach oben und die Gehäusehälfte(2) nach unten zeigt und nach dem Wenden umgekehrt. Nun ist es bei herkömmlichen Magnetbandcassetten äußerst schwierig, das Auftreten unterschiedlicher Positionsverhältnisse des Magnetbandes auf den Wickelnaben bei diesen beiden Cassettenpositionen zu vermeiden. Vor allen Dingen ist die Gestalt des Bandwickels des Magnetbandes auf den beiden Wickelnaben von erheblicher Bedeutung für einen glatten Wickelbetrieb. Bildet sich beispielsweise bei einem Bandwickel ein vorspringender Bereich, so steigt das Reibungsdrehmoment, und wenn dieses höher ist als das Wickeldrehmoment, wird der Wickelvorgang unterbrochen. Außerdem besteht die Gefahr, daß die Bandkanten beschädigt werden oder sich das Magnetband abnutzt.

Bei herkömmlichen Magnetbandcassetten wird das Reibungsdrehmoment bei der Drehung der Bandwickel durch die Anordnung von Gleitfolien oder flachen Platten in wirksamer Weise verringert. Im allgemeinen können jedoch flache Platten keinerlei Wirkung im Sinne einer Regelung der Gestalt des Bandwickels des Magnetbandes bewirken.

Wieder etwas anders liegt das Problem bei Miniaturcassetten für die analoge oder digitale Audio- oder Videoaufzeichnung, die in den letzten Jahren bekannt wurden. Diese Cassetten werden lediglich in einer Position in das Tonbandgerät eingelegt, jedoch existiert auch hier die Aufgabe, ein gleichmäßiges Wickelverhalten beim Aufnahme- und Abspielvorgang zu erzielen. Zusätzlich muß bei dieser Art von Cassetten die Höhenführung des Magnetbandes sehr exakt gewährleistet sein, um keine Beeinträchtigung der Ton- oder Bildwiedergabe zu haben.

Aus dem Stand der Technik sind verschiedene Versuche bekannt, um ein gutes Wickelverhalten und möglichst geringe und gleichmäßige Reibungswerte zu erzielen. In der DE 25 01 914 wird eine gewellte Folie in Kombination mit einer flachen Folie vorgeschlagen. Die DE 27 32 083 beschreibt eine etwa 90 μm dicke Gleitplatte mit radial zu den Nabenöffnungen verlaufenden konvexen Rippen, auf denen das Magnetband sich abstützt. Die DE 30 10 405 beschreibt Platten mit Biegestufen und Schlitzbereichen im Bereich der Biegestufen, wobei die Naben auf den Biegestufen ruhen. Weiterhin sind aus den DE-GM 73 30 078 und der DE 29 36 860 Gleitfolien mit federnden Bereichen bekannt; die US 4 289 285 beschreibt eine Gleitfolie, bei der Noppen auf der Folienoberfläche eine Verbesserung des Laufverhaltens des Magnetbandes bewirken sollen.

Es hat sich jedoch gezeigt, daß die vorgenannten Cassettenanordnungen keine überzeugende Lösung der der vorliegenden Erfindung zugrundeliegenden Aufgabe bieten, eine Magnetbandcassette zu finden, welche

a) ein möglichst gleichmäßiges Wickelmoment beim Auf- und Abwickeln des Magnetbandes von einer Nabe zur anderen,

b) ein gleichmäßiges Wickelbild ohne Vorsprünge,

c) eine gute Höhenführung des Magnetbandes bewirkt.

Es wurde gefunden, daß eine Magnetbandcassette der oben genannten gattungsmäßigen Art mit den im kennzeichnenden Teil der Ansprüche dargelegten Merkmalen die Aufgabe löst. Nähere Einzelheiten der Erfindung gehen aus der Beschreibung und den Zeichnungen hervor.

Die Erfindung wird nun anhand der Zeichnungen näher erläutert und zwar zeigen

Figur 1 - 2 Querschnitte durch Magnetbandcassetten mit erfindungsgemäßen Anordnungen von Gleitplatte und gewellter Folie

Figur 3 - 4 Querschnitte durch eine Magnetbandcassette mit anderen erfindungsgemäßen Gleitplatten

Figur 5 eine Aufsicht auf eine Gleitplatte für eine Magnetbandcassette gemäß Figur 4.

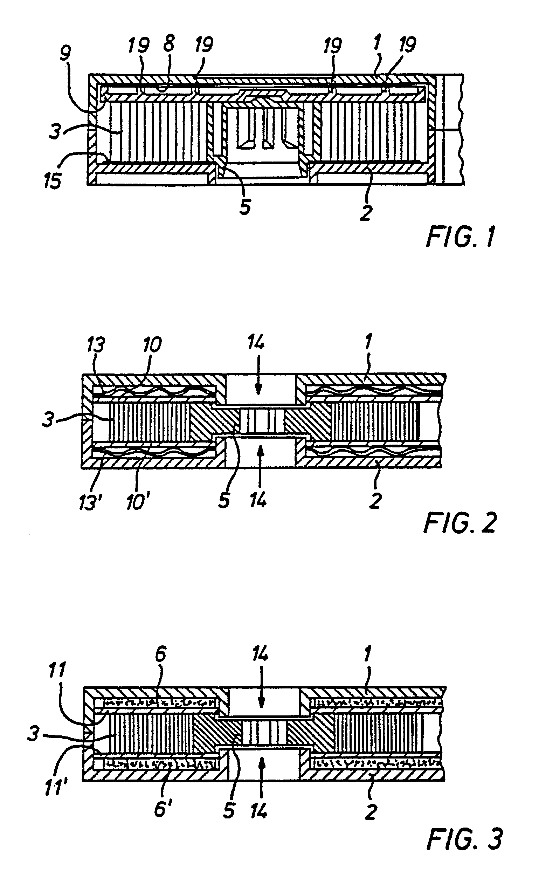

Bei allen· erfindungsgemäßen Ausführungsformen der Magnetbandcassette nach Figur 1 bis 4 ist gemeinsam, daß sich zwischen den Cassettenhälften und dem aufgewickelten Magnetband beziehungsweise der Wickelnabe statt einer Gleitfolie wie in konventionellen Magnetbandcassetten alternativ oder zusätzlich eine Gleitplatte (9, 10, 11, 12) befindet. Diese Gleitplatte bewirkt durch ihre federnde Ausführung einen, wie weiter unten geschildert, gleichmäßigen Andruck auf die Magnetbandwickel. Sie kann beidseitig oder, wie weiter unten geschildert auch nur einseitig angebracht sein. Die Gleitplatte kann aus transparentem oder opakem Kunststoff bestehen und hat eine Dicke im Bereich von 30 - 1000 μm, bevorzugt von 60 - 150 μm, je nachdem es die geometrischen Verhältnisse im Innenraum der Cassette gestatten und je nach erforderlicher Steifigkeit oder Andruckverhältnis. Selbstverständlich kann die Platte Aussparungen (14) an den Stellen haben, wo die Recorderachsen in die Wickelnabe (5) eingreifen.

Die federnde Wirkung der Gleitplatte (9) wird gemäß Figur 1 durch eine aus dem Stand der Technik bekannte gewellte Folie (8) bewirkt. Diese befindet sich zwischen der Innenseite des Cassettenoberteils (1) und der Gleitplatte (9) Bei dieser Ausführungsform hat sich bewährt, daß zwischen Cassettenunterteil (2) und Magnetband (3) eine im wesentlichen plane Gleitfolie (15) angeordnet ist. Die Platte (9) kann auf ihrer dem Magnetband (3) zugewandten Seite mit einem Gleitmittel beispielsweise mit Tetrafluorethylen (Teflon) beschichtet sein. Sie kann auf der der Wellfolie (8) zugewandten Seite Stege (19) zur Verstärkung besitzen.

In Figur 2 wird die federnde Wirkung durch zwei gewellte Folien (13, 13') erreicht, die sich zwischen Cassettenoberteil (1) und Platte (10) und zwischen Cassettenunterteil (2) und Platte (10') befinden.

In Figur 3 wird die federnde Wirkung statt dessen durch eine beispielsweise fest mit den Platten (11, 11') verbundene Schaumstoffschicht (6, 6') bewirkt, die sich analog zu Figur 2 zwischen Innenseite der Cassettenteile und den Platten (11, 11') befindet. Die Schaumstoffschicht kann beispielsweise auf den Platten aufgeklebt sein.

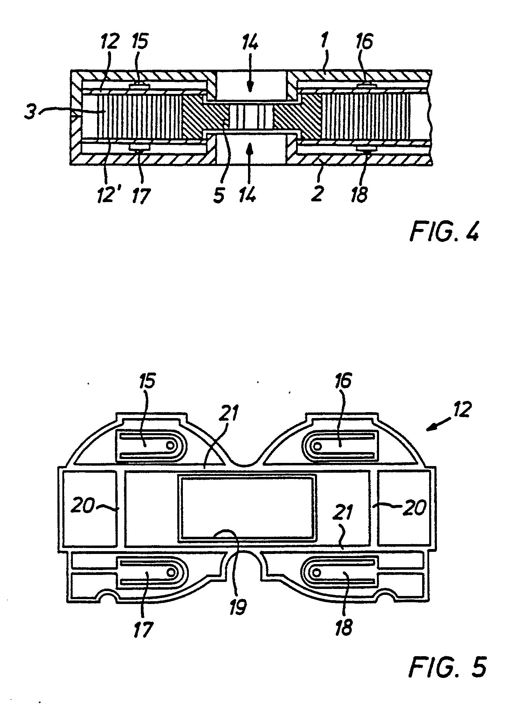

In Figur 4 wird eine andere besonders bevorzugte Ausführung der erfindungsgemäßen Bandcassette dargestellt. Die Gleitplatten (12, 12'), wovon eine in Figur 5 dargestellt ist, besitzen angespritzte Blattfedern (15 - 18), welche sich im Cassettenoberteil (1) beziehungsweise -unterteil (2) abstützen und so die Magnetbandwickel und die Wikkelnaben gleichmäßig belasten. Die Platten (12, 12') sind in einer bevorzugten Ausführung opak, indem dem Kunststoff Ruß zugesetzt ist. Sie können eine rechteckige Aussparung (19) in der Mitte zur Ausbildung eines Sichtfensters aufweisen. Weiterhin können die Platten (12, 12') nach oben weisende Rippen oder Faltlinien (20, 21) zur Verstärkung besitzen, welche auf der Unterseite der Platten Einschnitten entsprechen, so daß gleichzeitig die auf die Magnetbandwickel und die Wickelnaben liegende Fläche verkleinert wird. In einer Spritzguß- oder Stanzeinrichtung können die Platten ohne weiteres in die optimale Gestalt geformt werden.

Die Gleitplatte gemäß Figur 5 ist besonders geeignet für die Führung der Magnetbandwickel in einer Miniaturcassette, wie sie für analoge oder digitale Audio- beziehungsweise Videoaufzeichnung in den letzten Jahren aktuell geworden ist. Da in diesem Fall die Cassette lediglich in einer Position in das Tonbandgerät eingelegt wird, befindet sich sinnvollerweise die Platte (12) lediglich in einfacher Ausführung zwischen Cassettenoberteil und Magnetbandwickel.

Eingehende Messungen zeigten, daß abgesehen vom Anlaufdrehmoment ein gleichförmiges Drehmoment beim Auf- und Abwickeln des Magnetbandes von einer Nabe zur anderen beobachtet wurde, so daß ein äußerst gleichmäßiges Wikkelbild erzeugt wurde.

## Ansprüche

1. Magnetbandcassette, bestehend aus zwei Gehäusehälften und einem dazwischen befindlichen Innenraum, in dem sich auf einem Paar Naben ein auf- und abwickelbares Magnetband befindet sowie mindestens eine Gleitplatte für die federnde Führung der Wickelnaben und des Magnetbandes, wobei die Gleitplatte zwischen Magnetbandwickel und den Gehäusehälften angeordnet ist, dadurch gekennzeichnet, daß zwischen den Gehäusehälften (1 und/oder 2) und der Gleitplatte (9, 10) eine an sich bekannte Wellfolie (8, 13) angeordnet ist.

2. Magnetbandcassette nach Anspruch 1, dadurch gekennzeichnet, daß die Gleitplatte (9) auf ihrer der Wellfolie (8) zugekehrten Seite Stege (19) zur Verstärkung aufweist.

3. Magnetbandcassette nach dem Oberbegriff des Anspruchs 1, dadurch gekennzeichnet, daß die Gleitplatte ein Sandwichelement ist, bestehend aus einer federnden Schicht (6, 6'), die an der Innenseite einer Gehäusehälfte (1 und/oder 2) federnd anliegt und einer damit verbundenen Gleitplatte (11, 11'), die auf die Wickelnaben (5) und das Magnetband (3) drückt.

4. Magnetbandcassette nach Anspruch 3, dadurch gekennzeichnet, daß die federnde Schicht (6, 6') eine Schaumstoffschicht ist, die mit der Gleitplatte (11, 11') zusammengeklebt ist.

5. Magnetbandcassette nach dem Oberbegriff des Anspruchs 1, dadurch gekennzeichnet, daß die Gleitplatten (12, 12'), welche Biegestufen (20, 21) aufweisen können, mehrere angespritzte Blattfedern (15 - 18) haben, deren freie Enden sich an der Innenseite einer Gehäusehälfte (1, 2) abstützen, so daß sie einen gleichmäßigen Druck auf die Wickelnaben (5) und das Magnetband (3) ausüben.

6. Magnetbandcassette nach Anspruch 5, dadurch gekennzeichnet, daß die Platte (12, 12') aus opakem Kuststoff besteht und mit einer vorzugsweise rechteckigen Ausnehmung (19) in der Mitte versehen ist.

7. Magnetbandcassette nach den Ansprüchen 1 - 6, dadurch gekennzeichnet, daß die Platten (9, 10, 11, 12) eine Dicke im Bereich von 60 - 150 $\mu$m haben und an der dem Magnetband zugewandten Seite mit einer Gleitschicht versehen sind.

8. Magnetbandcassette nach dem Anspruch 7, dadurch gekennzeichnet, daß die Gleitschicht im wesentlichen aus Tetrafluorethylen (Teflon) besteht.

9. Magnetbandcassette nach den Ansprüchen 5 - 7, dadurch gekennzeichnet, daß die Gleitplatten (12, 12′) mehrere parallel zu den Längs- beziehungsweise Querseiten verlaufende Stufen beziehungsweise Rippen (20, 21) haben.

10. Magnetbandcassette nach den Ansprüchen 1 und 5, dadurch gekennzeichnet, daß sich nur eine Gleitplatte (9, 12) zwischen der Innenseite des Cassettenoberteils (1) und dem Magnetbandwickel (3) beziehungsweise den Wickelnaben (5) befindet.

FIG. 1

FIG. 2

FIG. 3

FIG. 4

FIG. 5